Europäisches Patentamt

European Patent Office

Office européen des brevets

(19)

(11) Veröffentlichungsnummer: **0 013 316
B1**

(12) # EUROPÄISCHE PATENTSCHRIFT

(45) Veröffentlichungstag der Patentschrift:
19.10.83

(21) Anmeldenummer: 79104544.6

(22) Anmeldetag: 16.11.79

(51) Int. Cl.³: **H 04 Q 7/02, H 04 B 7/155**

(54) **Sprechfunknetz mit einer Hauptstation, mindestens zwei auf demselben Funkkanal arbeitenden Relaisstationen und mit mehreren Unterstationen.**

(30) Priorität: 23.12.78 DE 2856019

(43) Veröffentlichungstag der Anmeldung:
23.07.80 Patentblatt 80/15

(45) Bekanntmachung des Hinweises auf die Patenterteilung:
19.10.83 Patentblatt 83/42

(84) Benannte Vertragsstaaten:
AT BE DE FR GB IT LU NL SE

(56) Entgegenhaltungen:
DE-B-2 445 296
US-A-4 056 780

(73) Patentinhaber: **ROBERT BOSCH GMBH, Postfach 50,
D-7000 Stuttgart 1 (DE)**

(72) Erfinder: **Wenzel, Manfred, Gruberzeile 73,
D-1000 Berlin 20 (DE)**

(74) Vertreter: **Schmidt, Hans-Ekhardt, Robert Bosch GmbH
Geschäftsbereich Elektronik Patent- und
Lizenzabteilung Forckenbeckstrasse 9-13,
D-1000 Berlin 33 (DE)**

## Sprechfunknetz mit einer Hauptstation, mindestens zwei auf demselben Funkkanal arbeitenden Relaisstationen und mit mehreren Unterstationen

### Stand der Technik

Die Erfindung geht aus von einem Sprechfunknetz nach der Gattung des Hauptanspruchs.

Bei einem bekannten Sprechfunknetz (DE-B-2 445 296) mit einer Hauptstation, mindestens zwei auf demselben Funkkanal arbeitenden Relaisstationen und mit mehreren Unterstationen kann die jeweils an einer Sprechfunkverbindung interessierte Unterstation ihren Gesprächswunsch durch ein bestimmtes Anrufsignal kundtun, das in der Regel von mehreren Relaisstationen gleichzeitig empfangen wird. Jede Relaisstation hat einen Auswerter, der eine für die betreffende Relaisstation charakteristische Auswertezeit aufweist. Die Auswertezeiten der Auswerter der Relaisstationen sind also zeitlich gestaffelt. Daraus ergibt sich zwangsläufig, daß die Aussendung der Anrufsignale der Unterstationen mindestens so groß sein muß wie die größte Auswertedauer aller Auswerter der Relaisstationen des Sprechfunknetzes.

Abgesehen von der verhältnismäßig langen Sendedauer für ein Anrufsignal ist damit auch der Nachteil verbunden, daß bei mobilen Unterstationen durch die Standortveränderung während des Aussendens des Anrufsignals das Auswerten in der Relaisstation nicht mit der genügenden Sicherheit erfolgen kann.

Als weiterer Nachteil des bekannten Sprechfunknetzes ist anzusehen, daß in dem Fall, daß sich eine mobile Unterstation in der Nähe einer Relaisstation mit einem Auswerter mit verhältnismäßig kurzer Auswertedauer befindet, die Relaisstation von der Hauptstation nicht durch ein Selektivrufsignal zum Durchschalten der Sprechfunkverbindung veranlaßt werden kann, bevor der Empfang des verhältnismäßig lang andauernden Anrufsignals beendet ist.

Schließlich hat das bekannte Sprechfunknetz auch noch den Nachteil, daß von der Hauptstation nicht mit ihrem charakteristischen Selektivruf gerufene Relaisstationen ihr Kennungssignal an die Hauptstation aussenden, obgleich die Hauptstation schon eine Relaisstation mit ihrem Selektivrufsignal gerufen hat.

Aus der US-A-4 056 780 ist eine Funkanlage mit mobilen Relaisstationen sowie aus den Relaisstationen herausnehmbaren tragbaren Funkgeräten und einer Zentralstation bekannt. Die Relaisstationen weisen unterschiedliche Zeitverzögerungen auf, und nur die Relaisstation mit der jeweils kürzesten Zeitverzögerung schaltet das empfangene Signal durch. Die Zeitverzögerungen sind jedoch nicht nach einem festen Schema einmalig festgelegt, sondern sie werden mit Hilfe eines Programmierimpulses, den diejenige Relaisstation aussendet, aus der ein tragbares Funkgerät herausgenommen worden ist und die gerade eine Nachricht empfängt, auf die jeweils nächsthöhere Zeitverzögerung umgeschaltet. Dabei reagiert die Relaisstation mit der kürzesten Zeitverzögerung ausschließlich auf einen sogenannten Subsquelch, das ist ein Dauerton, der bei einem speziellen Übertragungssystem (CTSS) zusammen mit der Sprachinformation übertragen wird.

### Vorteile der Erfindung

Das erfindungsgemäße Sprechfunknetz mit den kennzeichnenden Merkmalen des Hauptanspruchs hat den Vorteil, daß die Sendezeiten für die Anrufsignale der Unterstationen verhältnismäßig kurz sein können. Ein weiterer Vorteil besteht darin, daß alle von der Hauptstation nicht mit ihrem Selektivrufsignal gerufenen Relaisstationen ihr Kennungssignal an die Hauptstation nicht aussenden.

Durch die in den Unteransprüchen aufgeführten Maßnahmen sind vorteilhafte Weiterbildungen und Verbesserungen des im Hauptanspruch angegebenen Sprechfunknetzes möglich. Besonders vorteilhaft ist es, wenn die Speichereinheit eine mit dem Auswerter der Relaisstation verbundene Start-Logikschaltung, einen durch die Start-Logikschaltung ein- und ausschaltbaren Taktgenerator und eine durch den Taktgenerator gesteuerte Zählschaltung aufweist, die auf eine beliebige, vorwählbare Zeitverzögerung umschaltbar und mit der Start-Logikschaltung verbunden ist. Die Zeitspeichereinheit läßt sich mit in der Digitaltechnik üblicherweise verwendeten Bauteilen realisieren.

### Zeichnung

Ein Ausführungsbeispiel der Erfindung ist in der Zeichnung anhand mehrerer Figuren dargestellt und in der nachfolgenden Beschreibung näher erläutert. Die Zeichnung zeigt in

Fig. 1 eine schematische Darstellung des Sprechfunknetzes nach der Erfindung,

Fig. 2 ein Schaltbild einer Zeitspeichereinheit nach der Erfindung und

Fig. 3 ein Sendezeitschema für eine Unterstation und drei Relaisstationen.

### Beschreibung der Erfindung

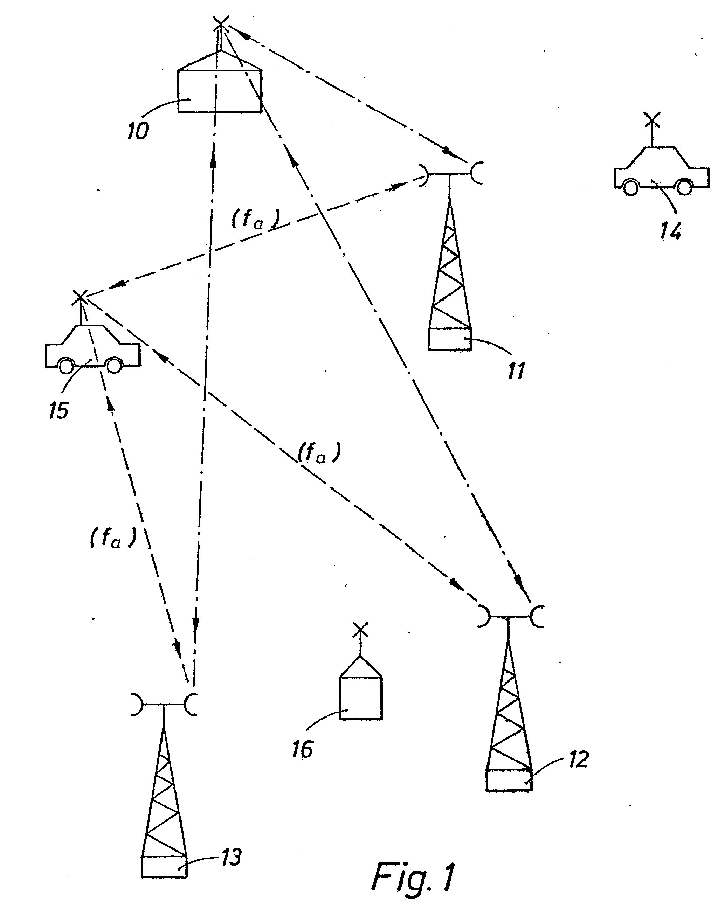

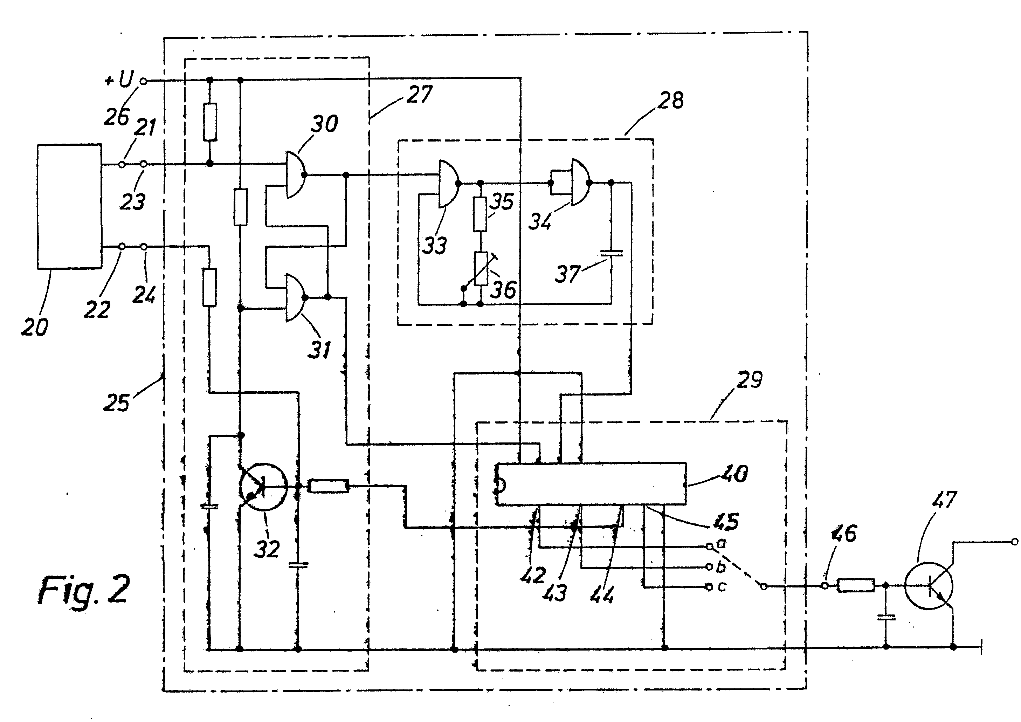

Zu einem erfindungsgemäßen Sprechfunknetz nach Fig. 1 gehören eine Hauptstation 10, drei Relaisstationen 11, 12 und 13 sowie zwei mobile Unterstationen 14, 15 und eine ortsfeste Unterstation 16. Die Hauptstation, die Relaisstationen und die Unterstationen besitzen Funksende- und -empfangsgeräte sowie Sende- und -Empfangsantennen. Geräte und Antennen werden im folgenden nur soweit beschrieben, als sie von den dem Fachmann bekannten Ausführungen abweichen. Jede Relaisstation enthält einen Auswerter 20 (Fig. 2), mit dem ein empfangenes und demoduliertes Anrufsignal sowie ein weiter unten erläutertes empfangenes und demoduliertes Selektivrufsignal ausgewertet werden kann. Der Auswerter 20 hat zwei Ausgänge 21, 22, die mit je einem Eingang 23, 24 einer Zeitspeichereinheit 25 verbunden sind. Ein Anschluß 26 der Zeitspeichereinheit 25 steht mit einem Pol, vorzugsweise dem positiven Pol, einer Betriebsgleichspannungsquelle mit der Spannung U in Verbindung. Die Zeitspeichereinheit 25 umfaßt eine Start-Logikschaltung 27, einen Taktgenerator 28 und eine elektronische Zählschaltung 29.

Die Start-Logikschaltung 27 enthält im wesentlichen eine Flipflopschaltung mit zwei NAND-Gliedern 30, 31 sowie einen Transistor 32 zum Rücksetzen der Start-Logikschaltung. Der Taktgenerator 28 ist mit Hilfe von zwei weiteren NAND-Gliedern 33, 34 sowie zwei Widerständen 35, 36 und einem Kondensator 37 aufgebaut. Die elektronische Zählschaltung 29 enthält einen, vorzugsweise als integrierte Schaltung, ausgeführten Dezimal-Zähler 40, dessen Ausgänge 42, 43 und 45 an je eine Anschlußstelle a bis c führen.

Gehören zu dem Sprechfunknetz — wie in dem angenommenen Beispiel nach Fig. 1 — nur drei Relaisstationen, so wird in der Zeitspeichereinheit 25 einer jeden Relaisstation eine andere von drei Anschlußstellen mit einem Ausgang 46 der Zeitspeichereinheit 25 verbunden. In dem Beispiel nach Fig. 2 besteht eine Verbindung zwischen der Anschlußstelle a und dem Ausgang 46. An den zuletzt genannten Ausgang schließt sich ein Schaltungsteil mit einem weiteren Transistor 47 an, dessen Bedeutung weiter unten beschrieben wird.

Im folgenden wird die Funktion des Auswerters 20 und der Zeitspeichereinheit 25 der Relaisstationen beschrieben.

Zur Einleitung einer Funkverbindung sendet eine Unterstation, zum Beispiel die mobile Station 15, ein Anrufsignal aus. Das Anrufsignal wird von den drei Relaisstationen 11, 12 und 13 (Fig. 1) gleichzeitig empfangen und demoduliert. Das demodulierte Anrufsignal ist vorzugsweise ein Tonfrequenzsignal mit der Frequenz $f_a$ von zum Beispiel 2600 Hertz und einer Dauer $t_a$ von zum Beispiel 500 ms. Die Auswerter 20 der drei Relaisstationen werten das demodulierte Anrufsignal aus und geben an ihren ersten Ausgängen 21 bei richtig erkanntem Anrufsignal ein bestimmtes Signal ab, zum Beispiel ein L-(low-)Signal, das dem Eingang 23 der Zeitspeichereinheit 25 zugeführt wird. Das L-Signal bewirkt ein Kippen der Flipflopschaltung mit den zwei NAND-Gliedern 30, 31 und damit ein Einschalten des Taktgenerators 28. Der Taktgenerator 28 gibt eine Folge von Rechteckimpulsen mit einer Folgefrequenz von zum Beispiel 1 Hertz an die elektronische Zählschaltung 29 ab. Die Folgefrequenz wird durch die Dimensionierung der Widerstände 35 und 36 und des Kondensators 37 bestimmt.

Gleichzeitig setzt das an dem Ausgang des NAND-Gliedes 31 liegende Signal den Dezimal-zähler 40 der Zählschaltung 29 zurück. Mit dem ersten dann eintreffenden Rechteckimpuls des Taktgenerators 28 wird der Dezimalzähler derart gesteuert, daß er an seinem Ausgang 42 ein bestimmtes Signal, zum Beispiel ein H-(high-)Signal, abgibt, das über die Anschlußstelle a und den Ausgang 46 den weiteren Transistor 47 in den Sättigungszustand steuert. Damit wird ein für die betreffende Relaisstation 12 charakteristisches Kennungssignal ausgelöst, das von der Relaisstation 11 als Modulation eines Trägers an die Hauptstation 10 übertragen wird. Bei dem vorstehend beschriebenen Beispiel wurde davon ausgegangen, daß die Zeitspeichereinheit 25 der Relaisstation 11 die kürzeste Verzögerungsdauer aller Relaisstationen hat.

Bei der Relaisstation 12 wäre dann beispielsweise die Anschlußstelle b und bei der Zeitspeichereinheit 25 der Relaisstation 13 die Anschlußstelle c mit dem Ausgang der Zeitspeichereinheit 25 verbunden, das heißt, die Relaisstationen 11, 12 und 13 können ihre Kennungen nur zeitlich gestaffelt an die Hauptstation aussenden.

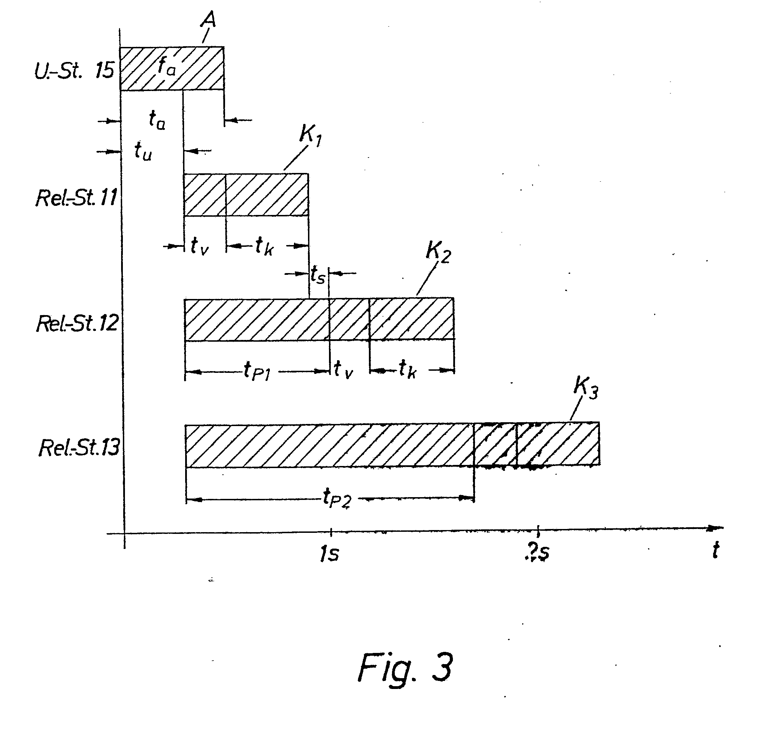

In Fig. 3 ist ein Schema gezeigt, aus dem der zeitliche Verlauf des Aussendens eines Anrufsignals A und der Kennungssignale K zu ersehen ist.

Hat die Relaisstation 11 ihre Kennung an die Hauptstation 10 ausgesendet und ist diese Kennung dort als richtig erkannt worden, so sendet die Hauptstation 10 ein für die Relaisstation 11 charakteristisches Selektivrufsignal aus. Dieses nur von der Relaisstation 11 als richtig zu erkennende Selektivrufsignal bewirkt in der Relaisstation 11 ein Durchschalten der Sprechfunkverbindung. Nach vier Rechteckimpulsen des Taktgenerators 28 gibt der Ausgang 44 des Dezimalzählers 40 ein bestimmtes Signal ab, das den Transistor 32 in die Sättigung steuert und damit die Flipflopschaltung aus den NAND-Gliedern 30, 31 zum Kippen veranlaßt. Dadurch wird der Taktgenerator 28 stillgesetzt.

Die Relaisstationen 12 und 13 können aus folgendem Grunde kein Kennungssignal abgeben, wenn die Relaisstation 11 bereits ihre Kennung an die Hauptstation 10 ausgesendet hat.

Da die Hauptstation 10 das Kennungssignal der Relaisstation 11 schon nach einer Auswertezeit $t_u$ von zum Beispiel 300 ms ausgewertet hat und nach einer Zeit $t_v$ das Selektivrufsignal für die Relaisstation 11 ausgesendet hat, empfangen die anderen Relaisstationen schon das für sie nicht bestimmte Selektivrufsignal, bevor ihre individuelle Zeitverzögerungsdauer abgelaufen ist; vgl. Fig. 3, Sicherheitsabstand $t_s$. Empfangen die Relaisstationen 12 und 13 das für sie nicht bestimmte Selektivrufsignal, das ist zum Beispiel eine Fünftonfolge, dann wird schon nach der Auswertung des dritten nicht stimmenden Tons an dem Ausgang 22 des Auswerters 20 ein bestimmtes Signal, vorzugsweise ein H-Signal, abgegeben, das über den Transistor 32 und die Flipflopschaltung mit den NAND-Gliedern 30 und 31 ein Stillsetzen des Taktgenerators 28 und ein Rücksetzen des Dezimalzählers 40 bewirkt. Zu dem Zeitschema in Fig. 3 ist noch zu sagen, daß mit $t_v$ eine Vortaktzeit bezeichnet ist, die auf Einschwingvorgänge bei der Auswertung zurückzuführen sind. Mit $t_k$ ist die Dauer der Kennungssignale K, mit $t_{p1}$ die Verzögerungszeit der Zeitspeichereinrichtung der Relaisstation 12 und mit $t_{p2}$ die Verzögerungszeit der Zeitspeichereinrichtung der Relaisstation 11 hat in dem vorliegenden Fall eine Verzögerungszeit gleich Null, wodurch sich der Vorteil ergibt, daß die Aussendung des Kennungssignals einer Relaisstation zu einem frühestmöglichen Zeitpunkt erfolgt.

Es sei noch erwähnt, daß der Dezimalzähler 40 (Fig. 2) vorzugsweise durch eine integrierte Schaltung vom Typ SCL 4017 ist und daß die NAND-Glieder 30, 31, 33 und 34 vorzugsweise zu einer integrierten Schaltung zusammengefaßt sind, die die Typenbezeichnung SCL 4011 trägt. Die Transistoren 32 und 47 können beispielsweise vom Typ BC 238 B sein.

## Patentansprüche

1. Sprechfunknetz mit einer Hauptstation (10), mindestens zwei auf demselben Funkkanal arbeitenden Relaisstationen (11, 12, 13) und mit mehreren Unterstationen (14, 15, 16), von denen die jeweils eine Sprechfunkverbindung einleitende Unterstation ein gleichzeitig von mehr als einer Relaisstation empfangenes Anrufsignal aussendet, wobei die Relaisstationen je einen Auswerter (20) zum Auswerten der Anrufsignale und je eine Zeitspeichereinheit (25) für eine gestaffelte Zeitverzögerung aufweisen, zur Abgabe eines Kennungssignals und zum Empfang eines von der Hauptstation nach empfangenem Kennungssignal ausgesendeten Selektivrufsignals eingerichtet sind und nur eine Relaisstation ein Selektivrufsignal zum Durchschalten der Sprechverbindung erhält, dadurch gekennzeichnet, daß jeder ein Anrufsignal als richtig erkennende Auswerter (20) der Relaisstationen (11, 12, 13) seine Zeitspeichereinheit (25) einschaltet und daß die Relaisstation (11) mit der kürzesten Zeitverzögerung bei Ablauf der Zeitverzögerung ihr Kennungssignal aussendet, das von der Hauptstation (10) unmittelbar nach dem Auswerten des Kennungssignals durch das für die betreffende Relaisstation charakteristische Selektivrufsignal beantwortet wird, während alle anderen Relaisstationen (12, 13) an der Aussendung ihres Kennungssignals dadurch gehindert werden, daß ihre Auswerter beim Erkennen des für sie nicht bestimmten Selektivrufsignals der Hauptstation (10) ein bestimmtes Signal an ihre Zeitspeichereinrichtung zum Zurücksetzen abgeben und daß sich die Zeitspeichereinheit mit der kürzesten Zeitverzögerung spätestens etwas nach der längsten Zeitverzögerung aller Zeitspeichereinheiten selbsttätig zurücksetzt.

2. Sprechfunknetz nach Anspruch 1, dadurch gekennzeichnet, daß die Zeitspeichereinheit eine mit dem Auswerter (20) der Relaisstation (11) verbundene Start-Logikschaltung (27), einen durch die Start-Logikschaltung ein- und ausschaltbaren Taktgenerator (28) und eine durch den Taktgenerator gesteuerte elektronische Zählschaltung (29) aufweist, die auf eine beliebige, vorwählbare Zeitverzögerung umschaltbar und mit der Start-Logikschaltung verbunden ist.

3. Sprechfunknetz nach Anspruch 2, dadurch gekennzeichnet, daß die Start-Logikschaltung (27) eine Flipflopschaltung mit zwei NAND-Gliedern (30, 31) enthält.

4. Sprechfunknetz nach Anspruch 2, dadurch gekennzeichnet, daß der Taktgenerator ein astabiler Multivibrator mit zwei NAND-Gliedern (33, 34) und zeitbestimmten Bauelementen (35, 36, 37) ist.

5. Sprechfunknetz nach Anspruch 2, dadurch gekennzeichnet, daß die elektronische Zählschaltung (29) einen Dezimalzähler (40) enthält, von dessen Ausgängen nur ein der vorwählbaren Zeitverzögerung entsprechender Ausgang (42) den Ausgang (46) der Zeitspeichereinheit (25) bildet.

6. Sprechfunknetz nach Anspruch 2 oder 5, dadurch gekennzeichnet, daß der Dezimalzähler (40) mindestens eine den verschiedenen Zeitverzögerungen der Zeitspeichereinrichtungen (25) aller zu dem Sprechfunknetz gehörenden Relaisstationen (11, 12, 13) entsprechende Anzahl von Ausgängen (42, 43, 45) zuzüglich eines Ausgangs (44) hat, der mit der Start-Logikschaltung (27) verbunden ist.

7. Sprechfunknetz nach Anspruch 1, dadurch gekennzeichnet, daß das Anrufsignal (A) ein Tonfrequenzsignal mit einer Frequenz ($f_a$) von etwa 2600 Hz und einer Dauer ($t_a$) von etwa 500 ms ist.

8. Sprechfunknetz nach Anspruch 1, dadurch gekennzeichnet, daß das Kennungssignal (K) und/oder das Selektivrufsignal ein Fünftonfolgesignal mit einer Dauer ($t_k$) von etwa 600 ms ist.

## Claims

1. A radiospeech network having a main station (10), at least two relay stations (11, 12, 13) operating on the same radio channel and a plurality of substations (14, 15, 16) of which the substation initiating a radiospeech connection at any given time transmits a call signal simultaneously received by more than one relay station, wherein each relay station has an evaluator (20) for evaluating the call signals and a timed storage unit (25) for time delay in echelon, and is equipped to transmit an identification signal and to receive a selective call signal transmitted by the main station after the identification signal has been received, and wherein only one relay station receives a selective call signal for establishing speech communication, characterised in that each evaluator (20) of the relay stations (11, 12, 13) which identifies a call signal as being correct switches on its timed storage unit (25), and in that, upon expiry of its time delay, the relay station (11) having the shortest time delay transmits its identification signal which is answered by the main station (11) immediately after evaluation of the identification signal by the selective call signal characteristic of the relevant relay station, while all the other relay stations (12, 13) are prevented from transmitting their identification signal in that their evaluators apply a specific signal to their timed storage devices to reset the latter upon detection of the selective call signal, not intended for them, from the main station (10), and in that the timed storage unit having the shortest time delay is automatically reset no later than slightly after the longest time delay of all the timed storage units.

2. A radiospeech network as claimed in claim 1, characterised in that the timed storage unit has a starting logic circuit (27) connected to the evaluator (20) of the relay station (11), a pulse generator (28) switchable on and off by the starting logic circuit, and an electronic counting circuit (29) which is controlled by the pulse generator and which is switchable to an optional, preselectable time delay and is connected to the starting logic circuit.

3. A radiospeech network as claimed in claim 2, characterised in that the starting logic circuit (27) includes a flip-flop circuit and two NAND gates (30, 31).

4. A radiospeech network as claimed in claim 2, characterised in that the pulse generator is an astable multivibrator having two NAND gates (33, 34) and time determining components (35, 36, 37).

5. A radiospeech network as claimed in claim 2, characterised in that the electronic counting circuit (29) includes a decimal counter (40) of whose outputs only one output (42) corresponding to the preselectable time delay forms the output (46) of the timed storage unit (25).

6. A radiospeech network as claimed in claim 2 or 5, characterised in that the decimal counter (40) has at least a number of outputs (42, 43, 45) corresponding in number to the various time delays of the timed storage devices (25) of all relay stations (11, 12, 13) belonging to the radiospeech network, plus one output (44) which is connected to the starting logic circuit (27).

7. A radiospeech network as claimed in claim 1, characterised in that the call signal (A) is an audio-frequency signal having a frequency ($f_a$) of approximately 2600 Hz and a duration ($t_a$) of approximately 500 ms.

8. A radiospeech network as claimed in claim 1, characterised in that the identification signal (K) and/or the selective call signal is a five tone sequence signal having a duration ($t_K$) of approximately 600 ms.

## Revendications

1. Réseau de radio communications téléphoniques comprenant une station principale (10), au moins deux stations relais (11, 12, 13) fonctionnant sur le même canal et plusieurs sous-stations (14, 15, 16) parmi lesquelles, une sous-station introduisant une liaison radiotéléphonique émet chaque fois, en même temps, un signal d'appel reçu par plus d'une station relais, auquel cas les stations relais possèdent chacune un dispositif d'exploration (20) des signaux d'appel et une unité de stockage de temps (25) à retard échelonné, en vue de délivrer un signal de reconnaissance d'appel et de recevoir un signal d'appel sélectif émis par la station principale après réception du signal de reconnaissance, de façon qu'une seule station de relais reçoive un signal d'appel sélectif pour établir la liaison de communication téléphonique, réseau caractérisé en ce que chacun des dispositifs d'exploration (20) de stations relais (11, 12, 13) reconnaissant comme correct un signal d'appel, met en circuit son unité de stockage de temps (25) et en ce que cette station relais (11) émet, après écoulement d'un retard de temps minimal, son signal de reconnaissance auquel la station principale (10) répond directement, après exploitation du signal de reconnaissance par le signal d'appel sélectif caractéristique de la station relais concernée, tandis que toutes les autres stations relais (12, 13) sont empêchées d'émettre leur signal de reconnaissance, par le fait que leur dispositif d'exploration, après détection d'un signal d'appel sélectif de la station principale (10) qui ne leur est pas destiné, délivre un signal déterminé à leur installation de stockage de temps pour une remise à l'état initial, l'unité de stockage de temps étant automatiquement remise à l'état initial avec le retard le plus court possible, au plus tard après le retard le plus long de toutes les unités de stockage de temps.

2. Réseau de radio-communications téléphoniques suivant la revendication 1, caractérisé en ce que l'unité de stockage de temps comprend un montage logique de démarrage (27) relié au dispositif d'exploitation de la station relais (11), un générateur de cadence (28) branché et débranché par le montage logique de démarrage (27), et un montage de comptage électronique (29) commandé par le générateur de cadence qui, après un temps de retard prédéterminé choisi, peut être commuté et relié au montage logique de démarrage.

3. Réseau de radio-communications téléphoniques, selon la revendication 2, caractérisé en ce que le montage logique de démarrage (27) comporte un montage de bascule bistable à deux portes »NAND« (30, 31).

4. Réseau de radio-communications téléphoniques selon la revendication 2, caractérisé en ce que le générateur de cadence est un multivibra- teur astable à deux portes »NAND« (33, 34) et éléments de détermination de temps (25, 36, 37).

5. Réseau de radio-communications téléphoniques selon la revendication 2, caractérisé en ce que le montage de comptage (29) comprend un compteur décimal (40) dont l'une seule des sorties (42) correspondant au retard de temps prédéterminé, forme la sortie (46) de l'unité de stockage de temps (25).

6. Réseau de radio communications téléphoniques selon les revendications 2 ou 5, caractérisé en ce que le compteur décimal (40) présente, à sa sortie (44), un nombre de sorties correspondant au moins aux différents retards de temps de toutes les stations relais (11, 12, 13) du réseau, cette sortie étant reliée au montage logique de démarrage (27).

7. Réseau de radio-communications téléphoniques selon la revendication 1, caractérisé en ce que le signal d'appel (A) consiste en un signal de tonalité à fréquence ($f_a$) d'environ 2600 Hertz et à durée ($t_a$) d'environ 500 ms.

8. Réseau de radio-communications téléphoniques selon la revendication 1, caractérisé en ce que le signal d'appel sélectif, est un signal à succession de cinq tonalités dont la durée est d'environ 600 ms.

*Fig. 1*

Fig. 2

0 013 316

Fig. 3